# EUROPÄISCHE PATENTSCHRIFT

(11) **EP 3 928 020 B1**
(45) Veröffentlichungstag und Bekanntmachung des Hinweises auf die Patenterteilung: **15.02.2023**
(21) Anmeldenummer: 19808601.9
(22) Anmeldetag: 27.11.2019
(51) Int. Cl.: F16L 33/025, F16L 33/035

(54) **SCHLAUCHKLEMME**
HOSE CLAMP
COLLIER DE SERRAGE POUR TUYAUX SOUPLES

(30) Priorität: 22.02.2019 EP 19158911
(43) Veröffentlichungstag der Anmeldung: 29.12.2021
(73) Patentinhaber: Oetiker Schweiz AG, 8810 Horgen (CH)
(72) Erfinder: VETTER, Andreas, 8808 Pfäffikon (CH); BÖSIGER, Maxime, 8840 Einsiedeln (CH); WIDRIG, Markus, 8717 Benken SG (CH)
(74) Vertreter: Strehl Schübel-Hopf & Partner
(86) Internationale Anmeldenummer: PCT/EP2019/082696
(87) Internationale Veröffentlichungsnummer: WO 2020/169223

(56) Entgegenhaltungen:
- EP-A1- 1 106 895
- EP-A1- 1 191 270
- US-A1- 2004 134 042

## Beschreibung

### Stand der Technik

Schlauchklemmen zum Anschluss etwa eines Schlauches an einen Rohrnippel werden meistens mit vorgegebenem Nenndurchmesser so gestaltet, dass im gespannten Zustand die Innenfläche des Klemmbandes über ihren gesamten Umfang lückenlos an dem Schlauch anliegt und zwischen diesem und dem Rohrnippel eine durchgehende Flächenpressung erreicht wird.

Aus WO 2017/005283 A1 ist eine Schlauchklemme bekannt, bei der der äußere Abschnitt des Klemmbandes mehrere Öffnungen und eine ohrartige Spanneinrichtung zum Spannen der Schlauchklemme um das Abbindegut und der innere Endabschnitt in die Öffnungen einhängbare Haken zum Schließen der Schlauchklemme hat. Im äußeren Klemmbandabschnitt ist ferner ein Zungenkanal zur Aufnahme und Führung einer am inneren Ende des Klemmbandes vorhandenen Zunge vorgesehen. Der Zungenkanal wird von einem aus dem Klemmband geschnittenen, über Verbindungsstege mit Seitenteilen des Klemmbandes verbundenen Bandbogen gebildet.

Eine Schlauchklemme mit den Merkmalen des Oberbegriffs des Anspruchs 1 wird in EP 1 191 270 A1 offenbart.

### Abriss der Erfindung

Der Erfindung liegt die generelle Aufgabe zugrunde, Nachteile, wie sie bei vergleichbaren Schlauchklemmen nach dem Stand der Technik auftreten, mindestens teilweise zu beseitigen. Eine speziellere Aufgabe der Erfindung kann darin gesehen werden, eine Schlauchklemme mit hoher Festigkeit der den inneren mit dem äußeren Bandabschnitt verbindenden Teile im Bereich der Zunge zu schaffen.

Die Lösung dieser Aufgabe gelingt mit der in Anspruch 1 angegebenen Schlauchklemme aus einem Klemmband mit im geschlossenen Zustand der Schlauchklemme einander überlappenden Bandabschnitten, an denen Haken zum Schließen der Schlauchklemme angeordnet sind, und mit einer im äußeren Bandabschnitt angeordneten Spanneinrichtung zum Spannen der Schlauchklemme um einen zu klemmenden Gegenstand, wobei das überlappte innere Ende des Klemmbandes als Zunge mit gegenüber dem Klemmband verringerter Breite gestaltet ist und der äußere Bandabschnitt einen Zungenkanal zur Aufnahme der Zunge aufweist. Dabei ist die Zunge aus dem Klemmband unter Bildung auswärts vorspringender Seitenstege und eines dazwischen liegenden mittleren Bodenteils herausgeprägt, wobei der von dem Klemmband gebildete Bodenteil kontinuierlich auf die Höhe der Seitenstege ansteigt.

Die erfindungsgemäße Gestaltung der Zunge bewirkt einen sanften Übergang zwischen der Zunge und dem Bandabschnitt mit voller Bandbreite und eine gleichmäßige Druckverteilung vom inneren zum äußeren Bandabschnitt.

Vorzugsweise weist der Zungenkanal einen aus dem Klemmband geschnittenen, über Verbindungsstege mit Seitenteilen des Klemmbandes verbundenen Bandbogen auf, wobei die auf beiden Seiten vorgesehenen Verbindungsstege in Umfangsrichtung der Schlauchklemme zueinander versetzt sind. Dadurch wird auch bei großer Länge des Zungenkanals vermieden, dass der Bandbogen kollabiert.

Beidseitig vom Zungenkanal bzw. Bandbogen jeweils zwischen dem Zungenkanal und den Klemmbandrändern können seitliche Verstärkungssicken vorgesehen werden, um die Stabilität der Schlauchklemme im Bereich des Zungenkanals zu verbessern.

Die Ausbildung durch Kaltumformung verleiht der Zunge hohe Festigkeit; sie lässt sich daher kompakt gestalten, ohne ihre Eigenschaft zur gegenseitigen Ausrichtung (Zentrierung) des inneren und des äußeren Bandabschnitts zu beeinträchtigen.

### Zeichnungen

Zwei Ausführungsbeispiele der Erfindung werden nachstehend anhand der Zeichnungen näher erläutert. Darin zeigen
Fig. 1 die Schlauchklemme im geschlossenen Zustand nach einem Ausführungsbeispiel der Erfindung,
Fig. 2 die Schlauchklemme im gestreckten Zustand,
Fig. 3 die in den Zungenkanal eingreifende Zunge, gesehen aus dem Innern der geschlossenen Schlauchklemme,
Fig. 4 die radial äußere Seite des Zungenendes,
Fig. 5 und 6 die Schlauchklemme im gestreckten Ausgangszustand nach einem weiteren Ausführungsbeispiel der Erfindung, gesehen von der im geschlossenen Zustand äußeren bzw. inneren Seite und
Fig. 7 eine vergrößerte Ansicht des Bandbogenabschnitts des Klemmbandes nach dem weiteren Ausführungsbeispiel

### Ausführungsbeispiel

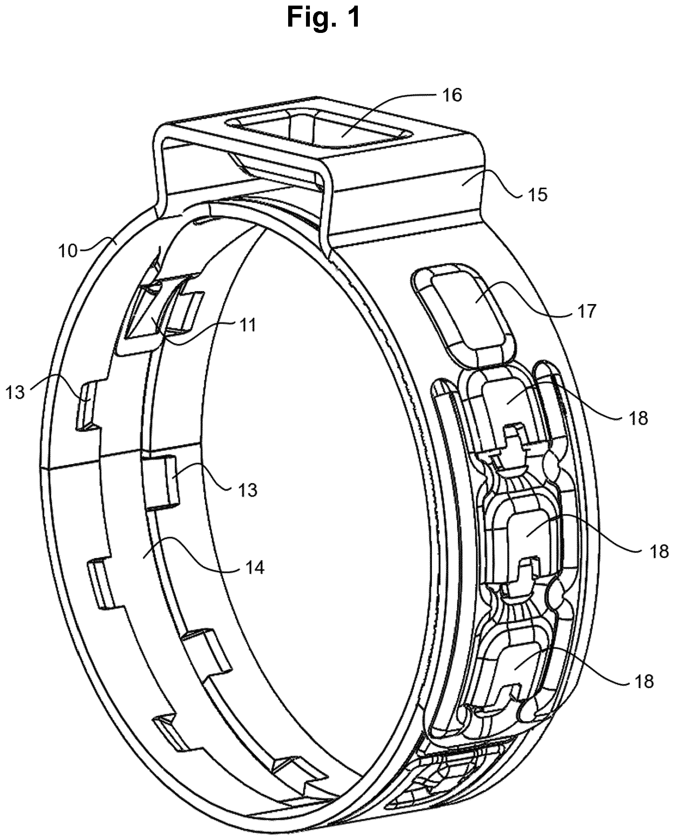

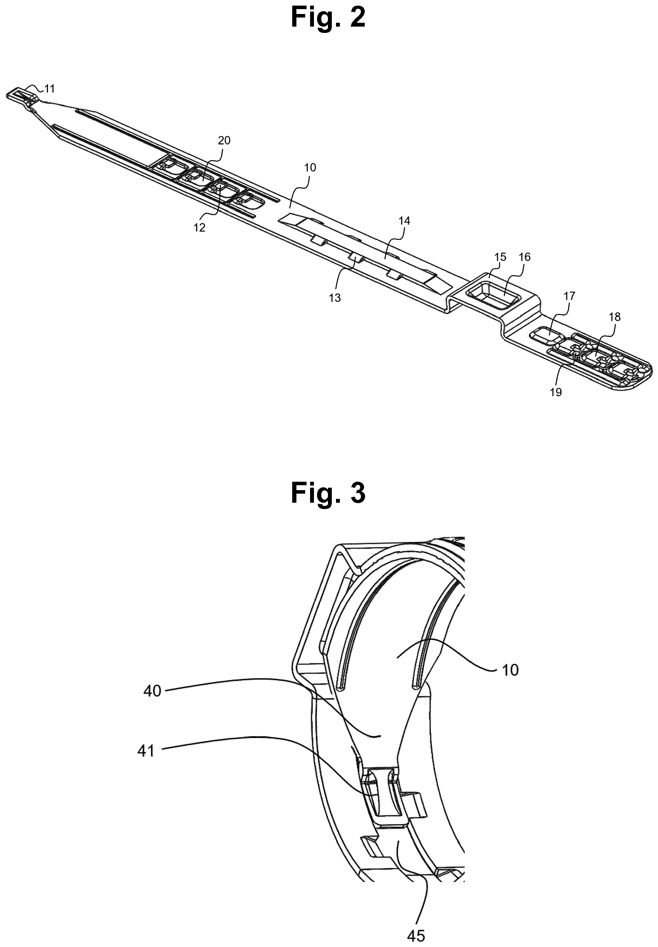

Die in den Fig. 1 und 2 dargestellte Schlauchklemme besteht aus einem offenen Klemmband **10,** das ausgehend von dem in Fig. 2 links oben liegenden inneren Klemmbandende eine Zunge **11,** eine Reihe von Positionierhaken, einen durch zwei parallele Längsschnitte aus dem Klemmband **10** geschnittenen, über Stege **13** mit Seitenteilen des Klemmbandes **10** verbundenen Bandbogen **14,** eine Spanneinrichtung **15** in Gestalt eines sogenannten "Oetiker"-Ohrs mit einem Paar von auswärts gekröpften Schenkeln und einem diese verbindenden, durch eine Sicke **16** verstärkten Steg, eine Freistellungshaube **17** sowie im anderen, äußeren Bandabschnitt drei Zughaken **19** mit zugehörigen Öffnungshauben **18** aufweist.

Die hier beschriebene Schlauchklemme ist insbesondere zur Dichtung und Befestigung von Faltenbälgen, etwa im Einsatz bei Gelenkwellen, aus thermoplastischen Kunststoffen oder anderen schwer verformbaren Materialien hoher Shore-Härte gedacht.

Im Gebrauch wird die vom Hersteller im geschlossenen Zustand gelieferte Schlauchklemme axial auf das Abbindegut, etwa einen Rohrnippel und einen diesen umgebenden Schlauch, aufgeschoben oder, alternativ, zur radialen Montage geöffnet und um das Abbindegut herumgelegt, wobei die Zunge **11** unter dem Bandbogen **14** zu liegen kommt. Sodann werden die drei Zughaken **19** mit den dem kleinstmöglichen Durchmesser des jeweiligen Abbindegutes entsprechenden Positionierhaken **12** in Eingriff gebracht.

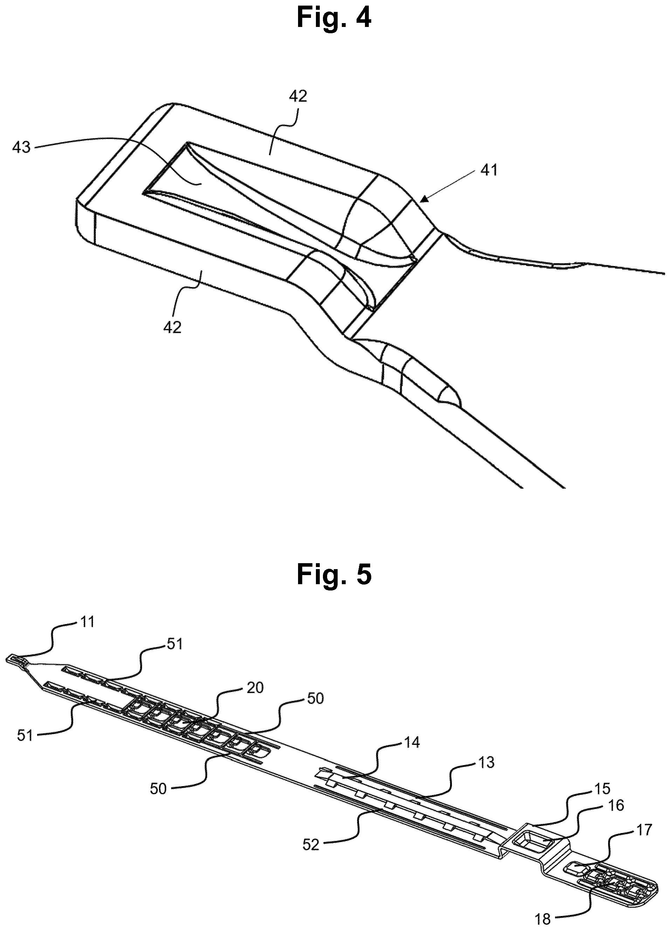

Gemäß Fig. 3 und 4 umfasst die Zunge **11** einen trapezförmigen Übergangsabschnitt **40,** in dem die Breite des Klemmbandes **10** von der vollen Bandbreite kontinuierlich auf die verringerte Breite eines Zungen-Endabschnitts **41** abnimmt.

Der Zungen-Endabschnitt **41** ist aus dem Klemmband **10** unter Bildung auswärts vorspringender Seitenstege **42** und eines dazwischen liegenden mittleren Bodenteils **43** herausgeprägt ist, wobei der von dem Klemmband **10** gebildete Bodenteil **43** kontinuierlich auf die Höhe der Seitenstege **42** ansteigt.

In dem in Fig. 3 angenommenen geschlossenen Zustand der Schlauchklemme greift der Zungen-Endabschnitt **41** in einen von dem Bandbogen **14** gebildeten Zungenkanal **45** ein, wobei die Höhe der Seitenstege **42** der Tiefe des Zungenkanals **45** entspricht.

Wie in den Fig. 1 und 2 gezeigt, sind die den Bandbogen **14** des Zungenkanals **45** mit den Seitenteilen des Klemmbandes **10** verbindenden Stege **13** auf beiden Seiten in Umfangsrichtung der Schlauchklemme um eine halbe Teilung zueinander versetzt sind. Dadurch wird der Bandbogen **14** bei geringer Anzahl von Stegen **13** optimal gegen Kollabieren abgestützt.

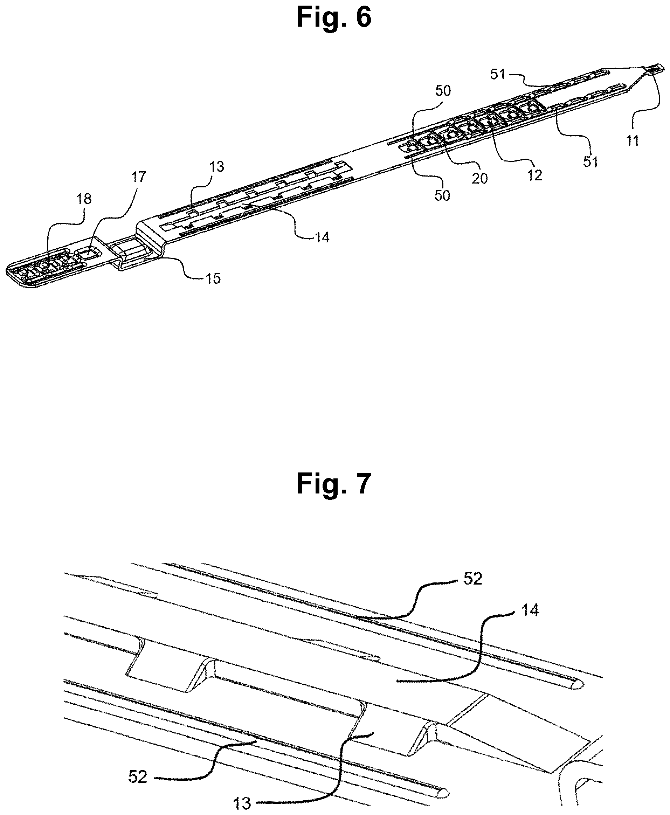

Die Fig. 5 bis 7 zeigen ein weiteres Ausführungsbeispiel der Erfindung, bei dem der Abschnitt des Klemmbandes **10,** in dem der als Zungenkanal **45** dienende Bandbogen **14** angeordnet ist, mit seitlichen Verstärkungssicken **52** versehen ist.

Dieser Klemmbandabschnitt ist besonders beansprucht und daher bruchanfällig. Die vorzugsweise durchgängig rinnenförmig ausgestalteten und auf beiden Seiten des Zungenkanals angeordneten Verstärkungssicken **52** tragen besonders wirksam zur Stabilisierung der Schlauchklemme in diesem Bereich bei.

Zusätzlich zu den Verstärkungssicken **52** im Bandbogenbereich sind im weiteren Ausführungsbeispiel auch Verstärkungssicken **50, 51** in dem Abschnitt des Klemmbandes **10** vorgesehen, der im geschlossenen Zustand der Schlauchklemme unterhalb der Spanneinrichtung **15** angeordnet ist. Je nach Schlauchdurchmesser befinden sich im geschlossenen Zustand der Schlauchklemme einer oder mehrere der Positionierhaken **12** in Eingriff mit der entsprechenden Anzahl von Zughaken **19.** Zungenseitig davon gelangt ein Teil des inneren Bandendes in die Position unterhalb der Spanneinrichtung **15.** Die in dem dafür in Frage kommenden Teil des Klemmbandes vorgesehenen seitlichen Wellensicken **51** stabilisieren das Klemmband **10** dabei gegen ein Einknicken in radialer Richtung unter der Spanneinrichtung **15.** Die Wellensicken **51** können in unterbrochener Rillenform oder als Aneinanderreihung von Einzelsicken ausgestaltet sein. Auf beiden Seiten des Klemmbandes gehen sie jeweils in durchgehend rinnenförmige Verstärkungssicken **50** über.

Im vorliegenden Ausführungsbeispiel sind die Verstärkungssicken **50, 51, 52** sowohl im Bereich der Positionierhaken **12** als auch in dem des Bandbogens **14** vorgesehen, um gemeinsam zur Gesamtstabilität der Schlauchklemme beizutragen. Es ist aber auch denkbar, nur die Verstärkungs- bzw. Wellensicken **50, 51** oder nur die Verstärkungssicken **52** vorzusehen.

### Bezugszeichen

- **10**: Klemmband
- **11**: Zunge
- **12**: Positionierhaken
- **13**: Steg
- **14**: Bandbogen
- **15**: Spanneinrichtung
- **16**: Sicke
- **17**: Freistellungshaube
- **18**: Öffnungshaube
- **19**: Zughaken
- **20**: Freistellfenster
- **40**: Übergangsabschnitt
- **41**: Zungen-Endabschnitt
- **42**: Seitenstege der Zunge **11**
- **43**: Bodenteil der Zunge **11**
- **45**: Zungenkanal
- **50**: Verstärkungssicke
- **51**: Wellensicke
- **52**: Verstärkungssicke

## Patentansprüche

1. Schlauchklemme aus einem Klemmband **(10)** mit im geschlossenen Zustand der Schlauchklemme einander überlappenden Bandabschnitten, an denen Haken **(12,19)** zum Schließen der Schlauchklemme angeordnet sind, und mit einer im äußeren Bandabschnitt angeordneten Spanneinrichtung **(15)** zum Spannen der Schlauchklemme um einen zu klemmenden Gegenstand, wobei das überlappte innere Ende des Klemmbandes **(10)** als Zunge **(11)** mit gegenüber dem Klemmband **(10)** verringerter Breite gestaltet ist und der äußere Bandabschnitt einen Zungenkanal **(45)** zur Aufnahme der Zunge **(11)** aufweist,
**dadurch gekennzeichnet, dass** die Zunge **(11)** aus dem Klemmband **(10)** unter Bildung auswärts vorspringender Seitenstege **(42)** und eines dazwischen liegenden mittleren Bodenteils **(43)** herausgeprägt ist, wobei der von dem Klemmband **(10)** gebildete Bodenteil **(43)** kontinuierlich auf die Höhe der Seitenstege **(42)** ansteigt.

2. Schlauchklemme nach Anspruch 1, wobei die Höhe der Seitenstege **(42)** der Zunge **(11)** der Tiefe des Zungenkanals **(45)** entspricht.

3. Schlauchklemme nach Anspruch 1 oder 2, wobei der Zungenkanal **(45)** einen aus dem Klemmband **(10)** geschnittenen, über Stege **(13)** mit Seitenteilen des Klemmbandes **(10)** verbundenen Bandbogen **(14)** aufweist.

4. Schlauchklemme nach Anspruch 3, wobei die auf beiden Seiten vorgesehenen Stege **(13)** in Umfangsrichtung der Schlauchklemme zueinander versetzt sind.

5. Schlauchklemme nach Anspruch 3, wobei die auf beiden Seiten vorgesehenen Stege **(13)** in Umfangsrichtung der Schlauchklemme einander paarweise gegenüberliegen.

6. Schlauchklemme nach einem der vorhergehenden Ansprüche, wobei beidseitig vom Zungenkanal **(45)** jeweils zwischen dem Zungenkanal **(45)** und den seitlichen Rändern des Klemmbandes **(10)** Verstärkungssicken **(52)** ausgebildet sind.

7. Schlauchklemme nach Anspruch 6, wobei die Verstärkungssicken **(52)** jeweils entlang der gesamten Länge des Zungenkanals **(45)** oder entlang nur eines Teils davon verlaufen.

8. Schlauchklemme nach Anspruch 6 oder 7, wobei die Verstärkungssicken **(52)** durchgängig rinnenförmig ausgestaltet sind.

## Claims

1. Hose clamp made of a clamping band **(10)** comprising band sections overlapping each other in the closed state of the hose clamp, on which hooks **(12, 19)** are arranged for closing the hose clamp, and comprising a tightening device **(15)** arranged in the outer band section for tightening the hose clamp around an object to be clamped, wherein the overlapped inner end of the clamping band **(10)** is formed as a tongue **(11)** with a reduced width compared to the clamping band **(10)** and the outer band section has a tongue channel **(45)** for receiving the tongue **(11),**
**characterised in that** the tongue **(11)** is stamped out of the clamping band **(10)** while forming outwardly projecting side flaps **(42)** and a central bottom portion **(43)** between them, the bottom portion **(43)** formed by the clamping band **(10)** continuously rising up to the height of the side flaps **(42).**

2. The hose clamp according to claim 1, wherein the height of the side flaps **(42)** of the tongue **(11)** corresponds to the depth of the tongue channel **(45).**

3. The hose clamp according to claim 1 or 2, wherein the tongue channel **(45)** comprises a band arch **(14)** cut out of the clamping band **(10)** and connected to side parts of the clamping band **(10)** via flaps **(13).**

4. The hose clamp according to claim 3, wherein the flaps **(13)** provided on both sides are offset with respect to each other in the circumferential direction of the hose clamp.

5. The hose clamp according to claim 3, wherein the flaps **(13)** provided on both sides are provided opposite to each other in pairs in the circumferential direction of the hose clamp.

6. The hose clamp according to one of the preceding claims, wherein reinforcement beads **(52)** are formed on both sides of the tongue channel **(45)** between the tongue channel **(45)** and the respective lateral edges of the clamping band **(10).**

7. The hose clamp of claim 6, wherein the reinforcement beads **(52)** each extend along the entire length of the tongue channel **(45)** or along only a portion thereof.

8. The hose clamp according to claim 6 or 7, wherein the reinforcement beads **(52)** are of formed as continuous grooves.

## Revendications

1. Collier de serrage pour tuyaux souples composé d'une bande de serrage (10) avec des tronçons de bande qui se chevauchent l'un sur l'autre lorsque le collier de serrage pour tuyaux souples est fermé, sur lesquels sont disposés des crochets (12, 19) pour fermer le collier de serrage pour tuyaux souples, et comprenant un dispositif de serrage (15) disposé dans le tronçon de bande extérieur pour serrer le collier de serrage pour tuyaux souples autour d'un objet à serrer, dans lequel l'extrémité intérieure en chevauchement de la bande de serrage (10) est formée en tant que languette (11) avec une largeur réduite par rapport à la bande de serrage (10) et le tronçon de bande extérieur présente un canal à languette (45) pour recevoir la languette (11),
**caractérisé en ce que** la languette (11) venant de la bande de serrage (10) est marquée par la formation de branches latérales (42) saillantes vers l'extérieur et d'une partie de fond médiane placée entre, dans lequel la partie de fond (43) formée par la bande de serrage (10) monte en continu sur la hauteur des branches latérales (42).

2. Collier de serrage pour tuyaux souples selon la revendication 1, dans lequel la hauteur des branches latérales (42) de la languette (11) correspond à la profondeur du canal à languette (45).

3. Collier de serrage pour tuyaux souples selon la revendication 1 ou 2, dans lequel le canal à languette (45) présente un arc de bande (14) coupé à partir de la bande de serrage (10), relié par des branches (13) à des parties latérales de la bande de serrage (10).

4. Collier de serrage pour tuyaux souples selon la revendication 3, dans lequel les branches (13) prévues sur les deux côtés sont décalées entre elles dans le sens périphérique du collier de serrage pour tuyaux souples.

5. Collier de serrage pour tuyaux souples selon la revendication 3, dans lequel les branches (13) prévues sur les deux côtés sont opposées par paires entre elles dans le sens périphérique du collier de serrage pour tuyaux souples.

6. Collier de serrage pour tuyaux souples selon l'une des revendications précédentes, dans lequel des deux côtés du canal à languette (45), des nervures de renfort (52) sont formées respectivement entre le canal à languette (45) et les bords latéraux de la bande de serrage (10).

7. Collier de serrage pour tuyaux souples selon la revendication 6, dans lequel les nervures de renfort (52) passent respectivement sur toute la longueur du canal à languette (45) ou le long d'une partie seulement de celui-ci.

8. Collier de serrage pour tuyaux souples selon la revendication 6 ou 7, dans lequel les nervures de renfort (52) sont formées en formant une gouttière constante.
